Europäisches Patentamt

European Patent Office

Office européen des brevets

(11) Veröffentlichungsnummer : **0 377 008 B1**

(12) **EUROPÄISCHE PATENTSCHRIFT**

(45) Veröffentlichungstag der Patentschrift :
**22.01.92 Patentblatt 92/04**

(51) Int. Cl.⁵ : **B65G 19/02, B65G 51/03**

(21) Anmeldenummer : **89906015.6**

(22) Anmeldetag : **07.06.89**

(86) Internationale Anmeldenummer :
**PCT/CH89/00110**

(87) Internationale Veröffentlichungsnummer :
**WO 89/12011 14.12.89 Gazette 89/29**

54 FOERDEREINRICHTUNG,INSBESONDERE STAUFOERDERER.

(30) Priorität : **09.06.88 CH 2204/88**

(43) Veröffentlichungstag der Anmeldung :
**11.07.90 Patentblatt 90/28**

(45) Bekanntmachung des Hinweises auf die
Patenterteilung :
**22.01.92 Patentblatt 92/04**

(84) Benannte Vertragsstaaten :
**AT CH DE FR GB IT LI NL SE**

(56) Entgegenhaltungen :
**EP-A- 0 111 945**
**DE-B- 1 267 608**
**GB-A- 989 641**
**GB-A- 1 196 943**

(73) Patentinhaber : **ROBITRON AG**
**Wiesengasse**
**CH-8222 Beringen (CH)**

(72) Erfinder : **MEIER, Markus**
**Schöneckstr. 361**
**CH-8215 Hallau (CH)**

(74) Vertreter : **Petschner, Goetz**
**Patentanwaltsbüro G. Petschner Seidengasse**
**18**
**CH-8001 Zürich (CH)**

EP 0 377 008 B1

## Beschreibung

Die vorliegende Erfindung betrifft eine Fördereinrichtung, insbesondere Stauförderer, mit einer Führungsbahn zur direkten oder indirekten Auflage von entlang der Führungsbahn unter der Wirkung eines kontinuierlich umlaufenden und unter der Führungsbahn angeordneten Gurtbandes zu bewegenden Stückgütern.

Mit Stauförderer wird eine in der Regel horizontal transportierende Fördereinrichtung für Stückgüter bezeichnet, bei der an beliebiger Stelle das Fördergut, etwa zum Wegnehmen, Umleiten, Bearbeiten u.dgl. angehalten bzw. gestaut wird, ohne dabei die Einrichtung selbst stillzusetzen (EP-A-0 111 995).

Üblich sind hier sogenannte Gurtbandförderer, bei welchen das Fördergut auf transportierenden Tragrollen aufliegt, die vom unter den Rollen durchlaufenden Gurt angetrieben werden. Staut sich dann das Fördergut auf, wird ein Steuersignal erzeugt, das über ein Schalt- und Hebelsystem den umlaufenden Gurt von den Rollen, auf denen die nachfolgenden Objekte liegen, wegstellt.

Solche Stauförderer weisen einen sehr komplizierten Aufbau auf und sind insbesondere dort nicht geeignet, wo hochempfindliche Stückgüter auf einem Luftpolster aufliegen.

Es ist somit Aufgabe der vorliegenden Erfindung, einen Stauförderer zu schaffen, bei welchem das Stückgut in Rinnen oder auf Schienen gleiten oder auf Rollenbahnen u.dgl. oder auf eigenem Fahrwerk bewegt werden oder auf Luftkissen schweben und sich ohne Anhalten der Einrichtung stauen kann.

Dies wird erfindungsgemäss dadurch erreicht, dass die Führungsbahn von mindestens einem Schleppförderschlitz durchsetzt ist, durch welchen sich Mitnehmer erstrecken, die je gurtseitig wenigstens drei in Bewegungsrichtung mit gegenseitigem Abstand hintereinander und untereinander höhenversetzt angeordnete Rollen- oder Walzenkörper umfassen, die je vom Gurtband teilweise umschlungen sind und mit dem Gurtband einen Schlupfantrieb für den Mitnehmer bilden.

Durch diese erfindungsgemässen Massnahmen ist es nunmehr möglich, Stückgüter oder deren Träger unabhängig von deren direkter (Rollen u. dgl.) oder indirekter (Luftkissen) Auflage bis zum Anstau sicher mitzunehmen, worauf sich bei zunehmendem Staudruck der Gurt infolge Schlupf ohne die betreffenden Mitnehmer weiterbewegt.

Vorteilhaft ist zudem eine einfache Konzeption einer solchen Anordnung.

Ferner kann der Schlupf resp. die Haltekraft durch Wahl von Gurten- und Rollenmaterial sowie Rollendurchmesser und deren Lagerung ausserordentlich fein auf die betreffenden Produkte abgestimmt werden.

Um zu verhindern, dass der Staudruck von den betreffenden Stückgütern übertragen wird, ist es von Vorteil, an den Mitnehmern Anschlagmittel vorzusehen, die mit benachbarten Mitnehmern distanzhaltend zusammenwirken.

Vorteilhafte Ausgestaltungen können ferner darin bestehen, die Mitnehmer über ein Führungsstück im Schleppförderschlitz selbst oder mittels Rollen auf Führungen abzustützen.

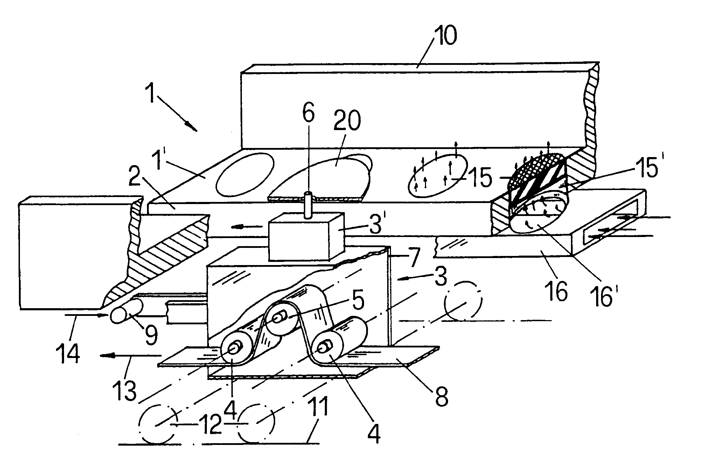

Eine beispielsweise Ausführungsform des Erfindungsgegenstandes ist nachfolgend anhand der Zeichnung, welche in schematischer, schaubildartiger Darstellung einen Stauförderer zeigt, näher erläutert.

Der dargestellte Stauförderer umfasst eine hier kanalartige Führungsbahn 1 mit einer Auflagefläche 1' für Stückgüter, hier in Form von CD's 20, sowie Seitenführungen 10.

Mittig der Führungsbahn 1 erstreckt sich ein Schleppförderschlitz 2 zur Längsführung einer Mehrzahl umlaufender Mitnehmer 3 (nur 1 Mitnehmer dargestellt).

Jeder Mitnehmer kann dabei mit einem flachen Führungsstück 3' im Schleppförderschlitz 2 geführt sein oder sich über Rollen 12 auf Führungen 11 abstützen, derart, dass die Mitnehmer ungehindert mit dem System entlang der Förderstrecke umlaufen können.

Jeder Mitnehmer 3 geht gurtseitig vorzugsweise in ein Chassis 7 über, welches hier drei, in Bewegungsrichtung gemäss Pfeil 13 mit gegenseitigem Abstand hintereinander und untereinander höhenversetzt angeordnete Rollen- resp. Walzenkörper 4 und 5 trägt. Diese Rollen resp. Walzen 4 und 5, welche frei umlaufend oder drehfest sein können, werden je von einem Gurtband 8 teilweise umschlungen und bilden mit diesem einen Schlupfantrieb für die Mitnehmer 3, wobei das Gurtband in der Regel kontinuierlich umlaufend angetrieben wird, was ansich bekannt ist und so nicht näher erläutert werden muss.

Wie erwähnt, werden von den Mitnehmern 3 hochempfindliche CD's 20 bewegt, welche hier auf einem Luftkissen über der Auflagefläche 1' der Führungsbahn 1 schweben. Hierfür ist ein Teil der Auflagefläche 1' durch strömungsmitteldurchlässige Körper 15 aus einem Sintermaterial gebildet, welche Körper in Durchbrechungen 15' eingesetzt sind, die über Oeffnungen 16' mit einem Druckkanal 16 für das Strömungsmittel, etwa Luft, in Strömungsverbindung stehen. Dadurch wird ein statisches Luftpolster ermöglicht, das gestattet, die Stückgüter schwebend zu halten.

Natürlich kann ein solches Luftpolster auch durch Luftdüsen erzeugt werden. Ferner kann sich das Stückgut auch direkt auf der Auflagefläche abstützen, oder es sind Zwischenglieder denkbar, wie Rollen, Tablare u.dgl.

Um ein unmittelbares Auflaufen der Stückgüter bei einem Stau zu verhindern, ist an jedem Mitnehmer 3 ein distanzhaltendes Anschlagmittel 9 vorgesehen, das mit dem vorlaufenden Mitnehmer 3 zusammenwirkt. Dieses stirnseitige Anschlagmittel 9 kann natürlich auch jeweils rückseitig angebracht werden.

Wird nun durch Stau am Anschlagmittel 9 ein zunehmender Staudruck erzeugt, wie das durch den Pfeil 14 angedeutet ist, bewegt sich das Gurtband 8 infolge Schlupf zwischen Band 8 und Rollen 4 und 5 in Richtung des Pfeiles 13 weiter, wogegen der betreffende Mitnehmer 3 und damit die von diesem etwa über einen Stift 6 bewegte CD stehen bleiben.

Bei den getroffenen, relativ unkomplizierten Massnahmen für diesen Schlupfantrieb ist es möglich, den Schlupf resp. die Haltekraft praktisch beliebig zu variieren und den Gegebenheiten anzupassen durch Wahl des seitlichen Abstandes der Rollen oder Walzen, der Lagerung der Rollen oder Walzen und/oder deren Oberflächenbeschaffenheit.

Weiter ist es denkbar, den Schlupfantrieb mit nur zwei oder mehr als drei Rollen zu bewerkstelligen.

Aus dem Vorbeschriebenen jedenfalls geht ein Stauförderer hervor, der gestattet, beliebige Stückgüter unabhängig von deren direkter oder indirekter Auflage bis zum Anstau sicher mitzunehmen und mit zunehmendem Staudruck anzuhalten, ohne hierfür die Anlage stillsetzen zu müssen, wobei dieser Stauförderer von hoher Funktionssicherheit und wartungsarm ist.

## Patentansprüche

1. Fördereinrichtung, insbesondere Stauförderer, mit einer Führungsbahn zur direkten oder indirekten Auflage von entlang der Führungsbahn unter der Wirkung eines kontinuierlich umlaufenden und unter der Führungsbahn angeordneten Gurtbandes zu bewegenden Stückgütern, dadurch gekennzeichnet, dass die Führungsbahn (1) von mindestens einem Schleppförderschlitz (2) durchsetzt ist, durch welchen sich Mitnehmer (3) erstrecken, die je gurtseitig wenigstens drei in Bewegungsrichtung mit gegenseitigem Abstand hintereinander und untereinander höhenversetzt angeordnete Rollen- oder Walzenkörper (4,5) umfassen, die je vom Gurtband (8) teilweise umschlungen sind und mit dem Gurtband einen Schlupfantrieb für den Mitnehmer bilden.

2. Fördereinrichtung nach Anspruch 1, dadurch gekennzeichnet, dass die Mitnehmer (3) distanzhaltende Anschlagmittel (9) tragen.

3. Fördereinrichtung nach Anspruch 1, dadurch gekennzeichnet, dass die Mitnehmer (3) mit einem Führungsstück (3') im Schleppförderschlitz (2) geführt sind.

4. Fördereinrichtung nach Anspruch 1, dadurch gekennzeichnet, dass die Mitnehmer (3) auf Führungen (11) über Rollen (12) abgestützt sind.

## Claims

1. Conveyor, particularly accumulation-type conveyor with a guideway for the direct or indirect support of piece goods to be moved along the guide track under the action of a continuously operating conveyor belt arranged below the guide track, characterized in that the guideway (1) is perforated by at least one dragging conveyor slit (2) through which extend entrainment means (3), on the belt side each of them surrounding at least three roller- or cylinder bodies (4, 5) succeeding one another at equal distances in the travel direction and height-staggered with respect to each other, which are partially wrapped by the conveyor belt (8) and form with the conveyor belt a slip drive for the entrainment means.

2. Conveyor according to Claim 1, characterized in that the entrainment means (3) are provided with distance-maintaining stop means (9).

3. Conveyor according to Claim 1, characterized in that the entrainment means (3) are guided in the dragging conveyor slit (2) by a guide piece (3').

4. Conveyor according to Claim 1, characterized in that the entrainment means (3) are supported on guides (11) via rollers (12).

## Revendications

1. Dispositif de convoyage, notamment un convoyeur d'accumulation, comportant une voie de guidage pour l'appui direct ou indirect de produits à transporter le long de la voie de guidage, sous l'action d'une courroie tournant en continu et placée sous la voie de guidage, caractérisé en ce que la voie de guidage (1) est traversée par au moins une fente de transport par traînage (2), à travers laquelle s'étendent des entraîneurs (3) qui comportent chacun, côté courroie, au moins trois corps de rouleau ou de cylindre (4, 5) placés espacés l'un derrière l'autre dans la direction du déplacement et décalés en hauteur, sur chacun desquels passe en partie la courroie (8) et qui forment un entraînement glissant pour l'entraîneur.

2. Dispositif de convoyage selon la revendication 1, caractérisé en ce que les entraîneurs (3) portent des moyens de butée (9) maintenant l'écartement.

3. Dispositif de convoyage selon la revendication 1, caractérisé en ce que les entraîneurs (3) sont guidés par une pièce de guidage (3') dans la fente de transport par traînage (2).

4. Dispositif de convoyage selon la revendication 1, caractérisé en ce que les entraîneurs (3) prennent appui sur des organes de guidage (11), par des rouleaux (12).